# EUROPÄISCHE PATENTANMELDUNG

(11) **EP 3 627 788 A1**
(43) Veröffentlichungstag der Anmeldung: **25.03.2020**
(21) Anmeldenummer: 18194992.6
(22) Anmeldetag: 18.09.2018
(51) Int. Cl.: H04L 29/06

(54) **VERFAHREN UND VORRICHTUNG ZUM KONFIGURIEREN EINES ZUGANGSSCHUTZSYSTEMS**

(71) Anmelder: Siemens Aktiengesellschaft, 80333 München (DE)
(72) Erfinder: Fusenig, Volker, 80993 München (DE); Schattleitner, Angela, 83104 Tuntenhausen (DE)

(57) **Zusammenfassung**

Die Erfindung betrifft ein computerimplementiertes Verfahren zum Konfigurieren eines Zugangsschutzsystems (FW), das zur Regulierung einer Datenkommunikationsverbindung einer computerimplementierten Anwendung (APP) zwischen einem ersten Rechnernetz (NW1) und einem zweiten Rechnernetz (NW2) geeignet ist. Dazu wird die computerimplementierte Anwendung (APP) im ersten Rechnernetz (NW1) in einer Produktivumgebung (PE) oder in einem Abbild des ersten Rechnernetzes (NW1 ') in einem Testsystem (TE) ausgeführt. Mittels eines Sensors (103) wird eine Datenkommunikationsverbindung (DC) der computerimplementierten Anwendung zum zweiten Rechnernetz (NW2) ermittelt und daraus eine Konfigurationsregel für das Zugangsschutzsystem (FW) zum Zulassen der Datenkommunikationsverbindung (DC) der computerimplementierten Anwendung zwischen dem ersten Rechnernetz und dem zweiten Rechnernetz (NW1, NW2) im Produktivsystem (PE) abgeleitet. Des Weiteren ist die Erfindung auf eine Vorrichtung, ein Testsystem, ein Zugangsschutzsystem, ein Computerprogrammprodukt und einen computerlesbaren Datenträger gerichtet.

## Beschreibung

Die Erfindung betrifft ein computerimplementiertes Verfahren und eine Vorrichtung zum Konfigurieren eines Zugangsschutzsystems, das zur Regulierung einer Datenkommunikationsverbindung einer computerimplementierten Anwendung zwischen einem ersten Rechnernetz und einem zweiten Rechnernetz geeignet ist. Des Weiteren ist die Erfindung auf eine Vorrichtung, ein Testsystem, ein Zugangsschutzsystem, ein Computerprogrammprodukt und auf einen computerlesbaren Datenträger gerichtet.

Eine Kommunikationsverbindung zwischen Computersystemen, Rechnern oder Netzwerken wird typischerweise mittels eines Zugangsschutzsystems, wie z.B. einer Firewall oder Security Gateway, geschützt, die typischerweise die Übertragung von Datenpaketen von einem in ein anderes Netz kontrolliert. Eine sichere Konfiguration eines solchen Zugangsschutzsystems erfolgt in der Regel nach dem Least-Privilege-Prinzip - dem Prinzip der geringsten Rechte - d.h. es wird lediglich eine Kommunikation über das Zugangsschutzsystem zugelassen bzw. freigeschalten, die von einem hinter dem Zugangsschutzsystem befindlichen System benötigt wird.

Die Definition von notwendigen Kommunikationsverbindungen und die entsprechende Konfiguration des Zugangsschutzsystems erfolgt in der Regel manuell und kann daher insbesondere bei einer agilen Softwareentwicklung aufwändig und fehleranfällig sein.

Es ist daher eine Aufgabe der vorliegenden Erfindung, die Konfiguration eines Zugangsschutzsystems, das eine Datenkommunikationsverbindung zwischen Rechnern oder Rechnernetzen regelt, zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum Konfigurieren eines Zugangsschutzsystems, das zur Regulierung einer Datenkommunikationsverbindung einer computerimplementierten Anwendung zwischen einem ersten Rechnernetz und einem zweiten Rechnernetz geeignet ist, wobei
- die computerimplementierte Anwendung bereitgestellt wird,
- die computerimplementierte Anwendung im ersten Rechnernetz ausgeführt wird oder ein Abbild des ersten Rechnernetzes in einem Testsystem bereitgestellt wird und darin die computerimplementierte Anwendung ausgeführt wird,
- eine bei der Ausführung der computerimplementierten Anwendung notwendige Datenkommunikationsverbindung zwischen dem ersten Rechnernetz oder dem Abbild des ersten Rechnernetzes und dem zweiten Rechnernetz von einem Sensor ermittelt wird,
- anhand der vom Sensor ermittelten Datenkommunikationsverbindung eine Konfigurationsregel für das Zugangsschutzsystem zum Zulassen der Datenkommunikationsverbindung der computerimplementierten Anwendung zwischen dem ersten Rechnernetz und dem zweiten Rechnernetz abgeleitet wird und
- die Konfigurationsregel zum Konfigurieren des Zugangsschutzsystems ausgegeben wird.

Es ist ein Vorteil der vorliegenden Erfindung, dass eine Konfigurationsregel für ein Zugangsschutzsystem für eine Kommunikation zwischen einem ersten und einem zweiten Rechnernetz automatisch ermittelt werden kann. Dazu wird eine computerimplementierte Anwendung, wie z.B. eine Software oder Applikation oder ein ausführbares Programm, ausgeführt und daraus ermittelt, welche Verbindungen bzw. Kommunikationsbeziehungen auf Netzwerkebene für die Applikation oder Software zu einem zweiten Rechnernetz erforderlich sind. Die computerimplementierte Anwendung kann vorzugsweise in einer Produktivumgebung, umfassend mindestens ein erstes und/oder ein zweites Rechnernetz, oder in einem Testsystem, umfassend mindestens ein Abbild des ersten Rechnernetzes, ausgeführt werden. Unter Produktivumgebung kann insbesondere die Netzwerkumgebung mit realen Bedingungen verstanden werden. Unter Testsystem, oder im Folgenden auch als Testumgebung bezeichnet, kann insbesondere eine (Software-)Entwicklungsumgebung verstanden werden. Das Testsystem kann insbesondere vorher bereitgestellt und/oder konfiguriert sein. Unter einem "Abbild eines Rechnernetzes" kann insbesondere eine Rekonstruktion des Rechnernetzes oder eines Teils des Rechnernetzes, umfassend alle relevanten Netzwerkkomponenten und Verbindungen, verstanden werden, die beispielsweise im Testsystem realisiert wird.

Es wird insbesondere angenommen, dass eine Datenkommunikationsverbindung, d.h. ein Austausch bzw. Senden und/oder Empfangen von Daten, zwischen dem ersten Rechnernetz und dem zweiten Rechnernetz in einer Produktivumgebung über mindestens ein Zugangsschutzsystem, wie z.B. eine Firewall oder ein Security Gateway, erfolgt. Für dieses Zugangsschutzsystem soll anhand der durch einen Sensor erfassten Datenkommunikationsverbindung, bzw. Datenverkehr, mindestens eine Konfigurationsregel ermittelt werden. Die Konfigurationsregel kann eine Zugangs- und/oder Zugriffsregel umfassen und soll insbesondere derart formuliert sein, dass bei einer Ausführung der computerimplementierten Anwendung in der Produktivumgebung diese Datenkommunikationsverbindung erlaubt ist. Ein Sensor kann beispielsweise ein Teil einer Netzwerkschnittstelle oder eines Zugangsschutzsystems sein oder als separate Vorrichtung verstanden werden, die insbesondere lediglich einen Datenverkehr weiterleitet und dabei aufzeichnet. Insbesondere kann ein Sensor auch als Software ausgestaltet sein, so dass damit beispielsweise auftretenden Datenverkehr zwischen zwei Rechnernetzen mitgelesen und daraus Kommunikationsbeziehungen abgeleitet werden kann.

Das Testsystem kann insbesondere abgeschirmt von anderen Kommunikationsbeziehungen bzw. geschützt sein. Beispielsweise ist das Testsystem eine sogenannte "Sandbox"-Umgebung. Dies hat insbesondere den Vorteil, dass lediglich diejenigen Kommunikationen im Testsystem erfolgen, die für die computerimplementierte Anwendung relevant sind. Die Wirkung, z.B. Verbindungsanfragen, der ausgeführten Kommunikation der computerimplementierten Anwendung kann innerhalb des Testsystems aufgezeichnet werden. Im Testsystem kann eine computerimplementierte Anwendung ausgeführt werden, ohne dass diese ein System beschädigt, verändert oder stört.

Das Abbild des ersten Rechnernetzes im Testsystem kann insbesondere ähnlich dem in der Produktivumgebung, z.B. hinsichtlich Netztopologie oder Architektur, sein. Das Testsystem ist insbesondere derart eingerichtet, dass eine von einer computerimplementierten Anwendung ausgehende Datenkommunikation abgebildet oder simuliert und dabei mittels eines Sensors erfasst werden kann. Das Abbild des ersten Rechnernetzes kann beispielsweise über eine Netzwerkschnittstelle mit dem zweiten Rechnernetz verbunden sein, so dass eine Datenkommunikation zwischen den beiden Netzen erfolgen und aufgezeichnet werden kann. Dies hat insbesondere den Vorteil, dass einerseits eine computerimplementierte Anwendung in einem geschützten Testsystem ausgeführt wird, aber anderseits eine Datenkommunikation mit dem zweiten Rechnernetz unter realen Bedingungen hinsichtlich des zweiten Rechnernetzes analysiert werden kann.

Aus einer aufgezeichneten Datenkommunikationsverbindung der computerimplementierten Anwendung wird mindestens eine Regel für ein Zugangsschutzsystem in der Produktivumgebung abgeleitet. Unter "ableiten" kann beispielsweise "ermitteln", "berechnen", "erlangen", "bestimmen", "einschränken", "herleiten", "folgern", "schlussfolgern", "erschließen", "rückschließen", oder ähnliches verstanden werden.

Sofern es in der nachfolgenden Beschreibung nicht anders angegeben ist, beziehen sich die Begriffe "ermitteln", "durchführen", "bereitstellen", "erfolgen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können.

Unter "computergestützt" oder "computerimplementiert" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Insbesondere kann das computerimplementierte Verfahren in einer Cloud realisiert sein, wobei sowohl die Produktivumgebung als auch das Testsystem in der Cloud implementiert sein kann.

In einer vorteilhaften Ausführungsform des computerimplementierten Verfahrens kann zusätzlich ein Abbild des zweiten Rechnernetzes im Testsystem bereitgestellt werden und es kann die Datenkommunikationsverbindung der computerimplementierten Anwendung lediglich zwischen dem Abbild des ersten Rechnernetzes und dem Abbild des zweiten Rechnernetzes von einem Sensor ermittelt werden.

Es kann insbesondere im Testsystem sowohl das erste Rechnernetz als auch das zweite Rechnernetz, mit dem z.B. die computerimplementierte Anwendung eine Kommunikationsverbindung aufbaut, abgebildet werden. Dies hat beispielsweise den Vorteil, dass jegliche Kommunikation zwischen den beiden Netzen in einer abgeschirmten Umgebung erfolgt, d.h. nicht durch unerwünschte Kommunikation gestört werden kann. Es können des Weiteren auch mehrere zweite Rechnernetze im Testsystem abgebildet werden.

In einer vorteilhaften Ausführungsform des computerimplementierten Verfahrens kann die Konfigurationsregel derart abgeleitet werden, dass gemäß der Konfigurationsregel lediglich eine vertrauenswürdige und/oder erlaubte Datenkommunikationsverbindung der computerimplementierten Anwendung über das Zugangsschutzsystem zugelassen wird.

Dadurch kann insbesondere eine Konfigurationsregel für das Zugangsschutzsystem gemäß dem Least-Privilege-Prinzip abgeleitet werden. Es werden lediglich diejenigen Verbindungen einer computerimplementierten Anwendung ausgeführt und aufgezeichnet, die erlaubt, für die Anwendung erforderlich und/oder vertrauenswürdig sind. Die Konfigurationsregel kann dann vorteilhafterweise lediglich diese Verbindungen zulassen.

In einer vorteilhaften Ausführungsform des computerimplementierten Verfahrens kann im Testsystem eine Datenkommunikationsverbindung vom zweiten Rechnernetz oder dem Abbild des zweiten Rechnernetzes zum Abbild des ersten Rechnernetzes unterbunden werden.

Vorzugsweise kann im Testsystem eine Datenkommunikationsverbindung, beispielsweise ein Zugriff einer anderen Software oder computerimplementierten Anwendung, in das Abbild des ersten Rechnernetzes hinein nicht freigeschalten bzw. erlaubt werden. Dies kann beispielsweise damit erreicht werden, dass im Testsystem lediglich vorgegebene computerimplementierte Anwendungen ausgeführt wird.

In einer vorteilhaften Ausführungsform des computerimplementierten Verfahrens kann im Testsystem die Datenkommunikationsverbindung der computerimplementierten Anwendung zwischen dem Abbild ersten Rechnernetzes und dem zweiten Rechnernetz oder dem Abbild des zweiten Rechnernetzes simuliert werden.

Die Datenkommunikationsverbindung zwischen den Rechnernetzen und insbesondere externe Kommunikation kann im Testsystem zumindest teilweise mittels einer computergestützten Simulation der Datenkommunikationsverbindung simuliert werden. Beispielsweise kann eine Anfrage einer computerimplementierten Anwendung lediglich mit einer simulierten Antwort bearbeitet werden, wie z.B. simulierte Rückgabewerte. Außerdem kann insbesondere lediglich ein Teil eines Rechnernetzes im Testsystem abgebildet sein, wobei Kommunikationsbeziehungen zumindest teilweise simuliert werden.

In einer vorteilhaften Ausführungsform des computerimplementierten Verfahrens kann eine Datenkommunikationsverbindung der computerimplementierten Anwendung, die zwischen dem ersten Rechnernetz und dem zweiten Rechnernetz über mehr als ein Zugangsschutzsystem erfolgt, durch mehr als einen Sensor ermittelt werden und für jedes dieser Zugangsschutzsysteme kann jeweils eine Konfigurationsregel zum Zulassen der Datenkommunikationsverbindung der computerimplementierten Anwendung abgeleitet werden.

Beispielsweise kann im Testsystem die ausgeführte Datenkommunikationsverbindung zwischen dem Abbild des ersten Rechnernetzes und dem zweiten Rechnernetz bzw. dem Abbild des zweiten Rechnernetzes über mehr als einen Netzwerkknoten, z.B. Router, zum zweiten Rechnernetz erfolgen. Die entsprechenden Netzwerkknoten und die entsprechende Kommunikation darüber können beispielsweise von mindestens einem Sensor ermittelt und für jeden der Netzwerkknoten kann jeweils eine Konfigurationsregel abgeleitet werden.

In einer vorteilhaften Ausführungsform des computerimplementierten Verfahrens kann die Art der Datenkommunikationsverbindung der computerimplementierten Anwendung ermittelt werden.

Es können beispielsweise Informationen oder Details, wie z.B. ein Kommunikationsprotokoll, zur Datenkommunikation von einem Sensor aufgezeichnet werden.

In einer vorteilhaften Ausführungsform des computerimplementierten Verfahrens kann aus der Art der Datenkommunikationsverbindung der computerimplementierten Anwendung eine Kommunikationscharakteristik ermittelt und daraus kann eine Konfigurationsregel für das Zugangsschutzsystem abgeleitet werden.

Beispielsweise kann anhand eines Kommunikationsprotokolls bestimmt werden, welche Art von Kommunikation über das Zugangsschutzsystem zugelassen werden soll bzw. welche Art von Kommunikation typisch ist. Das Zugangsschutzsystem kann beispielsweise damit prüfen, ob eine vorliegende Kommunikation typisch ist.

In einer vorteilhaften Ausführungsform des computerimplementierten Verfahrens kann die Konfigurationsregel vom Testsystem in eine Produktivumgebung, die dem Testsystem zumindest ähnlich ist, zum Konfigurieren des Zugangsschutzsystems bereitgestellt werden.

Die Konfigurationsregel, die durch aus der Aufzeichnung der Datenkommunikationsverbindung der computerimplementierten Anwendung im Testsystem ermittelt wurde, kann vorzugsweise automatisch in die Produktivumgebung zum Konfigurieren des Zugangsschutzsystems bereitgestellt werden.

In einer vorteilhaften Ausführungsform des computerimplementierten Verfahrens kann das Zugangsschutzsystem gemäß der Konfigurationsregel konfiguriert werden.

Insbesondere kann das Zugangsschutzsystem automatisch gemäß der Konfigurationsregel konfiguriert, d.h. eingestellt oder programmiert, werden.

In einer vorteilhaften Ausführungsform des computerimplementierten Verfahrens kann eine Konfigurationsanleitung zum Konfigurieren des Zugangsschutzsystems gemäß der Konfigurationsregel ermittelt und für eine Konfiguration des Zugangsschutzsystems ausgegeben wird.

Beispielsweise kann ein computerlesbares Konfigurationsskript erstellt werden, das die Konfigurationsregel umfasst und mit dem das Zugangsschutzsystem angesteuert werden kann, um dieses in der Produktivumgebung gemäß der Konfigurationsregel zu konfigurieren.

In einer vorteilhaften Ausführungsform des computerimplementierten Verfahrens können die Konfigurationsregel und/oder die Konfigurationsanleitung digital signiert werden.

Eine digitale Signatur kann beispielsweise eine Zeitinformation, Information über das Testsystem oder Namen eines Nutzers oder der computerimplementierten Anwendung umfassen. Die digitale Signatur kann somit insbesondere als Integritätsschutz dienen. Insbesondere können die Konfigurationsregel und/oder die Konfigurationsanleitung mittels der digitalen Signatur verifiziert werden, z.B. bevor sie in der Produktivumgebung umgesetzt werden.

Gemäß einem weiteren Aspekt betrifft die Erfindung eine Vorrichtung zum Konfigurieren eines Zugangsschutzsystems, das zur Regulierung einer Datenkommunikationsverbindung einer computerimplementierten Anwendung zwischen einem ersten Rechnernetz und einem zweiten Rechnernetz geeignet ist, umfassend:
- ein erstes Bereitstellungsmodul, das derart eingerichtet ist, die computerimplementierte Anwendung und/oder ein Abbild des ersten Rechnernetzes in einem Testsystem bereitzustellen,
- ein Anwendungsmodul, das derart eingerichtet ist, die computerimplementierte Anwendung im ersten Rechnernetz oder im Abbild des ersten Rechnernetzes im Testsystem auszuführen,
- einen Sensor, der derart eingerichtet ist, eine bei der Ausführung der computerimplementierten Anwendung notwendige Datenkommunikationsverbindung zwischen dem ersten Rechnernetz oder dem Abbild des ersten Rechnernetzes und dem zweiten Rechnernetz zu ermitteln,
- ein Ableitungsmodul, das derart eingerichtet ist, anhand der vom Sensor ermittelten Datenkommunikationsverbindung eine Konfigurationsregel für das Zugangsschutzsystem zum Zulassen der Datenkommunikationsverbindung der computerimplementierten Anwendung zwischen dem ersten Rechnernetz und dem zweiten Rechnernetz abzuleiten und
- ein Ausgabemodul, das derart eingerichtet ist, die Konfigurationsregel zum Konfigurieren des Zugangsschutzsystems auszugegeben.

Insbesondere kann der Sensor die Datenkommunikationsverbindung der computerimplementierten Anwendung im Testsystem oder in der Produktivumgebung erfassen.

In einer vorteilhaften Ausführungsform kann die Vorrichtung ein Konfigurationsmodul umfassen, das derart eingerichtet ist, das Zugangsschutzsystem gemäß der Konfigurationsregel zu konfigurieren.

Die Vorrichtung ist insbesondere derart ausgestaltet, die Schritte eines erfindungsgemäßen computerimplementierten Verfahrens auszuführen.

Gemäß einem weiteren Aspekt betrifft die Erfindung ein Testsystem, das eine erfindungsgemäße Vorrichtung umfasst.

Vorzugsweise kann das Testsystem, auch als Testumgebung bezeichnet, mit einem Konfigurationsmodul gekoppelt sein.

Gemäß einem weiteren Aspekt betrifft die Erfindung ein Zugangsschutzsystem, das zur Regulierung einer Datenkommunikationsverbindung einer computerimplementierten Anwendung zwischen einem ersten Rechnernetz und einem zweiten Rechnernetz geeignet ist und das nach einem erfindungsgemäßen Verfahren konfiguriert ist.

Des Weiteren betrifft die Erfindung ein Computerprogrammprodukt, das direkt in einen programmierbaren Computer ladbar ist, umfassend Programmcodeteile, die dazu geeignet sind, die Schritte eines erfindungsgemäßen Verfahrens durchzuführen und einen computerlesbaren Datenträger, auf dem das Computerprogrammprodukt gespeichert ist.

Insbesondere kann ein erfindungsgemäßes Computerprogrammprodukt von einem Netzwerkdienst, einem Computersystem, einem Serversystem, einem verteilten Computersystem, einem cloudbasierten Rechnersystem und/oder virtuellen Rechnersystem bereitgestellt werden. Die Bereitstellung kann beispielsweise als Download in Form eines Programmdatenblocks und/oder Befehlsdatenblocks, vorzugsweise als Datei, insbesondere als Downloaddatei, des vollständigen Computerprogrammprodukts erfolgen. Ein solches Computerprogrammprodukt wird beispielsweise unter Verwendung einer Bereitstellungsvorrichtung, insbesondere in Form eines computerlesbaren Datenträgers, eingelesen und führt die Programmbefehle aus, sodass das erfindungsgemäße Verfahren auf einem Computer zur Ausführung gebracht wird.

Ausführungsbeispiele des erfindungsgemäßen Verfahrens, der erfindungsgemäßen Vorrichtung, des Zugangsschutzsystems und des erfindungsgemäßen Testsystems sind in den Zeichnungen beispielhaft dargestellt und werden anhand der nachfolgenden Beschreibung näher erläutert. Es zeigen:
- Fig. 1: ein Ablaufdiagramm eines erfindungsgemäßen Verfahrens;
- Fig. 2: eine schematische Darstellung eines Ausführungsbei-spiels eines erfindungsgemäßen Verfahrens;
- Fig. 3: eine zweite schematische Darstellung eines zweiten Ausführungsbeispiels eines erfindungsgemäßen Verfahrens;
- Fig. 4: eine dritte schematische Darstellung eines dritten Ausführungsbeispiels eines erfindungsgemäßen Verfahrens;
- Fig. 5: eine vierte schematische Darstellung eines vierten Ausführungsbeispiels eines erfindungsgemäßen Verfahrens; und
- Fig. 6: eine schematische Darstellung Ausführungsbeispiels eines einer erfindungsgemäßen Vorrichtung in Block-darstellung.

Einander entsprechende Teile sind in allen Figuren mit den gleichen Bezugszeichen versehen.

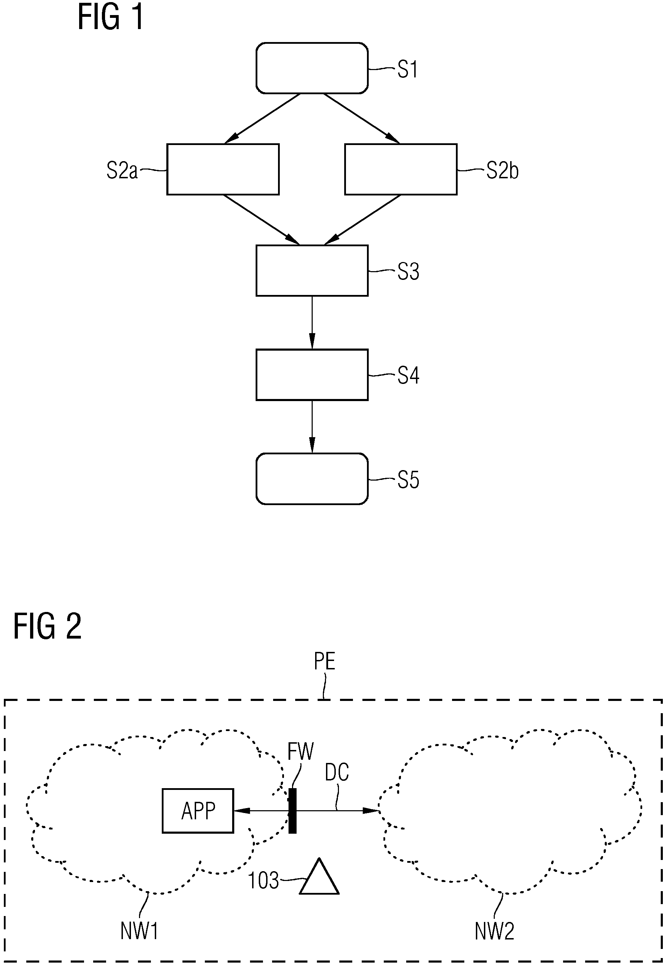

Figur 1 zeigt ein Ablaufdiagramm eines erfindungsgemäßen Verfahrens zum Konfigurieren eines Zugangsschutzsystems, das eine Datenkommunikationsverbindung einer computerimplementierten Anwendung, wie z.B. eine Applikation oder Software, zwischen einem ersten Rechnernetz und einem zweiten Rechnernetz reguliert bzw. kontrolliert, wie z.B. einen Zugriff beschränkt oder Datenpakete durchlässt. Das erste Rechnernetz ist beispielsweise über das Zugangsschutzsystem, wie z.B. eine Firewall, mit dem zweiten Rechnernetz verbunden. Die Software oder auch Applikation kann insbesondere im ersten Rechnernetz ausgeführt werden und eine Datenkommunikationsverbindung in das zweite Rechnernetz benötigen. Beispielsweise kann eine computerimplementierte Anwendung ein technisches System im ersten Rechnernetz steuern, wobei die computerimplementierte Anwendung Parameterdaten von einer Datenbank, die im zweiten Rechnernetz angeordnet ist, anfordert. Erfindungsgemäß soll mindestens eine Konfigurationsregel zum Konfigurieren des Zugangsschutzsystems ermittelt werden. Das Verfahren kann in einer Produktivumgebung oder in einer Testumgebung, auch als (Software-)Entwicklungsumgebung bezeichnet, durchgeführt werden, die insbesondere zumindest teilweise der Produktivumgebung ähnelt. Insbesondere kann eine computerimplementierte Anwendung im Testsystem, d.h. in einer Testumgebung, getestet oder entwickelt werden und anschließend in der Produktivumgebung installiert werden. Die Produktivumgebung ist insbesondere die Softwareumgebung, wo die computerimplementierte Anwendung in vollem Umfang ausgeführt wird. Das Testsystem ist vorzugsweise abgeschirmt, d.h. es sind beispielsweise lediglich vertrauenswürdige und/oder notwendige Kommunikationsverbindungen erlaubt. Die Datenkommunikation in das Testsystem hinein kann insbesondere unterbunden sein bzw. lediglich Datenkommunikation aus dem Testsystem heraus kann freigeschalten sein.

Im ersten Schritt S1 des Verfahrens wird eine computerimplementierte Anwendung bereitgestellt. Im Folgenden soll mindestens eine Konfigurationsregel für das Zugangsschutzsystem ermittelt werden, die eine von der computerimplementierten Anwendung ausgehende Datenkommunikationsverbindung zwischen dem ersten und zweiten Rechnernetz zulässt.

Im nächsten Schritt S2a oder S2b wird die computerimplementierte Anwendung in der Produktivumgebung oder in der Testumgebung ausgeführt. Im Schritt 2a wird die computerimplementierte Anwendung im ersten Rechnernetz, d.h. in der Produktivumgebung, ausgeführt. Im Schritt 2b wird alternativ ein Abbild des ersten Rechnernetzes oder zumindest eines Teils des ersten Rechnernetzes in einer Testumgebung bereitgestellt und darin die computerimplementierte Anwendung ausgeführt. Das Abbild des ersten Rechnernetzes in der Testumgebung ist hinsichtlich der Netztopologie des ersten Rechnernetzes in der Produktivumgebung vorzugsweise ähnlich. Das erste Rechnernetz bzw. das Testsystem sind mit dem zweiten Rechnernetz verbunden.

Insbesondere wird die computerimplementierte Anwendung derart ausgeführt, dass alle bei der Ausführung notwendigen bzw. erwünschten Kommunikationsbeziehungen mit anderen Applikationen im ersten Rechnernetz bzw. im Abbild des ersten Rechnernetzes und zum zweiten Rechnernetz ermittelt werden können.

Im nächsten Schritt S3 wird mittels eines Sensors jede benötigte Datenkommunikationsverbindung der computerimplementierten Anwendung im ersten Rechnernetz oder im Abbild des ersten Rechnernetzes und/oder jede Verbindung zum zweiten Rechnernetz aufgezeichnet, d.h. es wird beispielsweise ermittelt, welche Datenkommunikationsverbindung von der computerimplementierten Anwendung aufgebaut wird. Es kann zusätzlich die Art der Datenkommunikationsverbindung, wie z.B. das Kommunikationsprotokoll, mit aufgezeichnet werden, wobei aus dieser Information beispielsweise typische Zugriffsmuster abgeleitet werden können. Insbesondere soll die Datenkommunikationsverbindung zwischen dem ersten Rechnernetz und dem zweiten Rechnernetz erfasst werden, die in der Produktivumgebung über das zu konfigurierende Zugangsschutzsystem läuft. Beispielsweise kann ein Sensor an der Stelle des Zugangsschutzsystems installiert sein und so die Datenkommunikationsverbindung ermitteln.

Im nächsten Schritt S4 wird ausgehend von der vom Sensor erfassten Datenkommunikationsverbindung zwischen den beiden Rechnernetzen, die für die Ausführung der computerimplementierten Anwendung erforderlich ist, mindestens eine Konfigurationsregel für das Zugangsschutzsystem abgeleitet. Aus der Art der Datenkommunikation, z.B. welche Daten übertragen, angefordert oder gesendet werden, kann eine Kommunikationscharakteristik ermittelt werden. Um beispielsweise lediglich die für die computerimplementierte Anwendung erforderliche Datenkommunikationsverbindung zwischen dem ersten und zweiten Rechnernetz zuzulassen, kann eine Konfigurationsregel für das Zugangsschutzsystem erstellt werden, die keinen weiteren Datenverkehr zulässt. Im abgeschirmten Testsystem kann somit insbesondere nur eine vertrauenswürdige Datenkommunikationsverbindung aus einem ersten Rechnernetz in ein zweites Rechnernetz erfasst werden und dementsprechend Konfigurationsregeln für Zugangsschutzsysteme erstellt werden. In anderen Worten, die Testumgebung kann vorzugsweise abgeschirmt realisiert sein, so dass lediglich die notwendige Datenkommunikationsverbindung einer computerimplementierten Anwendung erfolgt. Diese wird mittels eines Sensors ermittelt und eine Konfigurationsregel abgeleitet.

Im Schritt S5 wird die abgeleitete Konfigurationsregel ausgegeben. Die Konfigurationsregel kann vom Testsystem in die Produktivumgebung übermittelt werden, so dass dort ein entsprechendes Zugangsschutzsystem gemäß der Konfigurationsregel konfiguriert werden kann.

Zusätzlich kann beispielsweise eine Konfigurationsanleitung, wie z.B. ein Konfigurationsskript, gemäß der Konfigurationsregel erstellt werden. Dieses kann beispielsweise von einem Konfigurationsmodul ausgeführt werden, so dass das Zugangsschutzsystem gemäß der Konfigurationsregel konfiguriert wird.

Die Konfigurationsregel und/oder die Konfigurationsanleitung können außerdem digital signiert sein, um beispielsweise deren Herkunft oder Integrität zu beweisen.

Figur 2 zeigt schematisch ein Ausführungsbeispiel eines erfindungsgemäßen, computerimplementierten Verfahrens. Es ist eine Produktivumgebung PE gezeigt. Die Produktivumgebung PE kann insbesondere als reale Netzwerkumgebung aufgefasst werden. Die Produktivumgebung PE umfasst ein erstes Rechnernetz NW1 und ein zweites Rechnernetz NW2, die über eine Kommunikationsverbindung zur Übertragung einer Datenkommunikation DC einer computerimplementierten Anwendung APP miteinander verbunden sind. Ein Zugangsschutzsystem FW, z.B. eine Firewall, kann die Datenkommunikation DC regulieren und/oder kontrollieren. Dazu soll gemäß einem erfindungsgemäßen Verfahren mindestens eine Konfigurationsregel für ein erfindungsgemäßes Zugangsschutzsystem FW ermittelt werden. Die Konfigurationsregel so derart eingerichtet sein, dass insbesondere die Datenkommunikation DC der computerimplementierte Anwendung APP zugelassen wird.

Dazu wird die computerimplementierte Anwendung APP im ersten Rechnernetz NW1 ausgeführt und mittels eines Sensors 103 wird die Datenkommunikation DC der computerimplementierten Anwendung APP zum zweiten Rechnernetz NW2 aufgezeichnet. Anhand der ermittelten Datenkommunikationsverbindung DC kann eine Regel abgeleitet und als Konfigurationsregel für das Zugangsschutzsystem FW ausgegeben werden. Beispielsweise umfasst die Konfigurationsregel lediglich Zugriffsrechte für diese bestimmte Datenkommunikationsverbindung DC und schließt damit alle weiteren möglichen Datenverbindungen aus.

Insbesondere umfasst die ermittelte Konfigurationsregel Einstellungswerte für das Zugangsschutzsystem FW, mit denen das Zugangsschutzsystem FW derart eingerichtet wird, dass die Datenkommunikationsverbindung DC über das Zugangsschutzsystem durchgeführt werden kann, also nicht blockiert oder beschränkt wird.

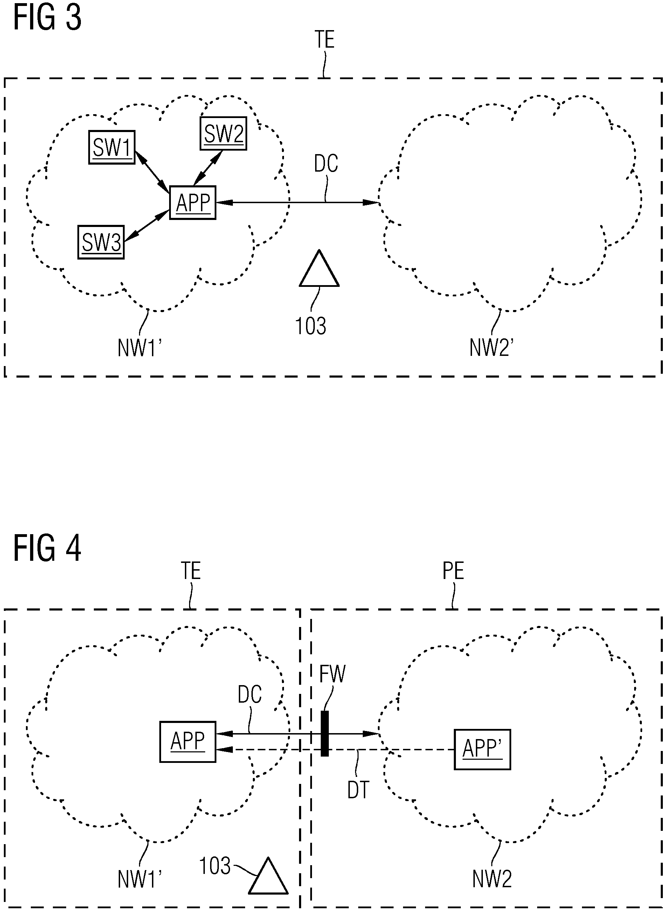

Figur 3 zeigt schematisch ein zweites Ausführungsbeispiel eines erfindungsgemäßen Verfahrens. Es ist ein Testsystem TE, wie z.B. eine Sandbox, gezeigt. Um eine Konfigurationsregel für ein Zugangsschutzsystem, das eine Datenkommunikationsverbindung zwischen einem ersten Rechnernetz und einem zweiten Rechnernetz reguliert, zu ermitteln, wird jeweils ein Abbild der beiden Rechnernetze NW1', NW2' im Testsystem TE bereitgestellt. Beispielsweise ist das erste Rechnernetz ein sicheres Netzwerk und das zweite Rechnernetz ein öffentliches Netzwerk, so dass die Kommunikation einer computerimplementierten Anwendung APP aus dem ersten Rechnernetz in das zweite Rechnernetz reguliert werden soll.

Die computerimplementierte Anwendung APP wird im Testsystem TE ausgeführt. Beispielsweise tauscht die computerimplementierte Anwendung APP mit verschiedener Software SW1, SW2, SW3 im ersten Rechnernetz NW1' und mit dem Rechnernetz NW2' Daten aus. Alternativ kann zumindest ein Teil dieser Datenkommunikationsverbindung DC auch mittels einer computergestützten Simulation simuliert werden, so dass beispielsweise lediglich simulierte Daten bei einer Anfrage zurückgegeben werden.

Mittels eines Sensors 103, der beispielsweise anstatt eines Zugangsschutzsystems im Testsystem eingerichtet sein kann, kann insbesondere die Datenkommunikationsverbindung DC der computerimplementierten Anwendung APP zwischen dem ersten Rechnernetz NW1' und dem zweiten Rechnernetz NW2' erfasst werden. Abhängig von der aufgezeichneten Datenkommunikation DC kann eine Konfigurationsregel für ein Zugangsschutzsystem in der Produktivumgebung ermittelt werden. Es kann vorzugsweise eine Konfigurationsregel nach dem Least-Privilege-Prinzip abgeleitet werden.

In Figur 4 ist in schematischer Darstellung ein weiteres Ausführungsbeispiel eines erfindungsgemäßen, computerimplementierten Verfahrens gezeigt. Es ist ein Abbild eines ersten Rechnernetzes NW1' in einer Testumgebung TE gezeigt. Die Testumgebung TE ist über eine Kommunikationsverbindung mit der Produktivumgebung PE verbunden, so dass insbesondere eine Datenkommunikation DC der computerimplementierten Anwendung APP zwischen dem Abbild des ersten Rechnernetzes NW1' und dem zweiten Rechnernetz NW2 ermöglicht wird. Zusätzlich kann eine Datenübertragung DT einer anderen computerimplementierten Anwendung APP' aus dem zweiten Rechnernetz NW2 in die Testumgebung TE hinein unterbunden bzw. beschränkt werden. Beispielsweise kann somit das Senden von Daten aus dem zweiten Netzwerk NW2 in die Testumgebung TE hinein nicht erlaubt werden. Beispielsweise kann für die Testumgebung lediglich eine Verbindung zum Internet freigeschalten sein.

Die Produktivumgebung PE umfasst des Weiteren eine Firewall FW, die die Datenströme zwischen dem ersten Rechnernetz NW1 und dem zweiten Rechnernetz NW2 reguliert, kontrolliert und/oder beschränkt. Um eine Konfigurationsregel für die Firewall FW zu ermitteln, wird eine computerimplementierte Anwendung APP im Abbild des ersten Rechnernetzes NW1' in der Testumgebung TE ausgeführt und die erforderliche Datenkommunikation DC mittels des Sensors 103 aufgezeichnet.

Auf Basis der aufgezeichneten Datenkommunikation DC wird anschließend mindestens eine Konfigurationsregel abgeleitet. Außerdem kann zusätzlich ein Konfigurationsskript erstellt werden, welches eine Konfigurationsanleitung für die Firewall FW gemäß der Konfigurationsregel umfasst.

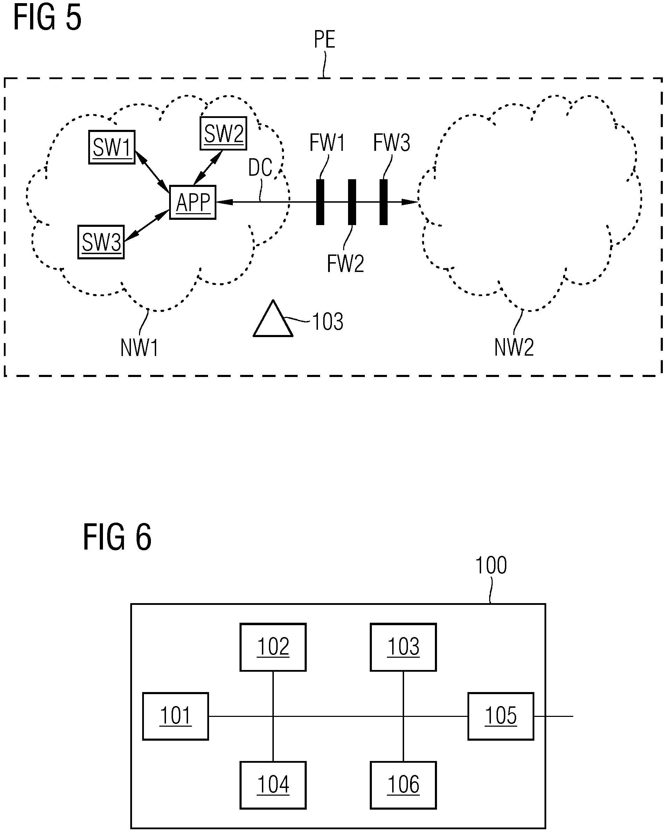

In Figur 5 ist ein weiteres Ausführungsbeispiel eines erfindungsgemäßen Verfahrens gezeigt. Eine computerimplementierte Anwendung APP wird im ersten Rechnernetz NW1 ausgeführt, um die Datenkommunikation DC in das zweite Rechnernetz NW2 der Produktivumgebung PE zu erfassen. Hierbei erfolgt die Datenkommunikation DC zwischen den beiden Rechnernetzen NW1, NW2 in der Produktivumgebung PE über mehrere Netzwerkknoten, wie z.B. Router, für deren Zugangsschutzsysteme FW1, FW2, FW3, jeweils eine Konfigurationsregel ermittelt werden soll. Dazu kann zunächst die einzelnen Netzwerkknoten und die darüber laufende Datenkommunikation zwischen dem ersten Rechnernetz NW1 und dem zweiten Rechnernetz NW2 mittels eines Sensors 103 bestimmt werden. Anschließend werden für jedes Zugangsschutzsystem FW1, FW2, FW3 eine Konfigurationsregel abgeleitet und anschließend implementiert.

Figur 6 zeigt ein Ausführungsbeispiel einer erfindungsgemäßen Vorrichtung 100 zum Konfigurieren eines Zugangsschutzsystems, das zur Regulierung einer Datenkommunikation einer computerimplementierten Anwendung zwischen einem ersten Rechnernetz und einem zweiten Rechnernetz geeignet ist. Die Vorrichtung ist vorzugsweise mit einem erfindungsgemäßen Zugangsschutzsystem gekoppelt. Die Vorrichtung 100 umfasst ein Bereitstellungsmodul 101, ein Anwendungsmodul 102, mindestens einen Sensor 103, ein Ableitungsmodul 104, ein Ausgabemodul 105 und ein Konfigurationsmodul 106. Die Vorrichtung kann des Weiteren mindestens einen Prozessor umfassen, der derart eingerichtet ist, mindestens einen der Schritte eines erfindungsgemäßen Verfahrens auszuführen.

Das Bereitstellungsmodul 101 ist derart eingerichtet, eine computerimplementierte Anwendung bereitzustellen, die im ersten Rechnernetz ausgeführt werden soll. Des Weiteren kann das Bereitstellungsmodul ein Abbild des ersten Rechnernetzes und/oder ein Abbild des zweiten Rechnernetzes in einem Testsystem bereitstellen. Das Anwendungsmodul 102 ist derart konfiguriert, die computerimplementierte Anwendung in der Produktivumgebung oder im Testsystem auszuführen, so dass mittels des Sensors 103 die Datenkommunikationsverbindung der computerimplementierten Anwendung APP zwischen dem ersten Rechnernetz und dem zweiten Rechnernetz aufgezeichnet werden kann. Das Ableitungsmodul 104 ist derart konfiguriert, anhand der aufgezeichneten Datenkommunikation eine Konfigurationsregel für ein Zugangsschutzsystem in der Produktivumgebung abzuleiten. Die ermittelte Konfigurationsregel wird mittels des Ausgabemoduls 105 beispielsweise an das Konfigurationsmodul 106 übermittelt. Das Konfigurationsmodul 106 ist derart eingerichtet, ein Zugangsschutzsystem gemäß der Konfigurationsregel und/oder mittels einer Konfigurationsanleitung zu konfigurieren. Insbesondere kann ein Konfigurationsmodul ein Zugangsschutzsystem derart gemäß der Konfigurationsregel einrichten, dass darüber lediglich vertrauenswürdiger und/oder notwendiger Datenverkehr zugelassen wird.

Die Vorrichtung 100 kann insbesondere mindestens einen Prozessor umfassen, um das erfindungsgemäße Verfahren auszuführen oder zu implementieren. Insbesondere kann das Testsystem in einer Cloud-Umgebung umgesetzt sein, die mit der Produktivumgebung über eine Kommunikationsverbindung verbunden ist.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Konfigurieren eines Zugangsschutzsystems (FW), das zur Regulierung einer Datenkommunikationsverbindung einer computerimplementierten Anwendung (APP) zwischen einem ersten Rechnernetz (NW1) und einem zweiten Rechnernetz (NW2) geeignet ist, wobei
- die computerimplementierte Anwendung (APP) bereitgestellt wird (S1),
- die computerimplementierte Anwendung im ersten Rechnernetz (NW1) ausgeführt wird (S2a) oder ein Abbild des ersten Rechnernetzes (NW1') in einem Testsystem (TE) bereitgestellt wird und darin die computerimplementierte Anwendung (APP) ausgeführt wird (S2b),
- eine bei der Ausführung der computerimplementierten Anwendung notwendige Datenkommunikationsverbindung (DC) zwischen dem ersten Rechnernetz (NW1) oder dem Abbild des ersten Rechnernetzes (NW') und dem zweiten Rechnernetz (NW2) von einem Sensor (103) ermittelt wird (S3),
- anhand der vom Sensor ermittelten Datenkommunikationsverbindung (DC) eine Konfigurationsregel für das Zugangsschutzsystem (FW) zum Zulassen der Datenkommunikationsverbindung (DC) der computerimplementierten Anwendung (APP) zwischen dem ersten Rechnernetz (NW1) und dem zweiten Rechnernetz (NW2) abgeleitet wird (S4) und
- die Konfigurationsregel zum Konfigurieren des Zugangsschutzsystems (FW) ausgegeben wird (S5).

2. Computerimplementiertes Verfahren nach Anspruch 1, wobei zusätzlich ein Abbild des zweiten Rechnernetzes (NW2') im Testsystem (TE) bereitgestellt wird und die Datenkommunikationsverbindung (DC) der computerimplementierten Anwendung (APP) lediglich zwischen dem Abbild des ersten Rechnernetzes (NW1') und dem Abbild des zweiten Rechnernetzes (NW2') vom Sensor ermittelt wird.

3. Computerimplementiertes Verfahren nach einem der vorhergehenden Ansprüche, wobei die Konfigurationsregel derart abgeleitet wird, dass gemäß der Konfigurationsregel lediglich eine vertrauenswürdige und/oder erlaubte Datenkommunikationsverbindung (DC) der computerimplementierten Anwendung (APP) über das Zugangsschutzsystem (FW) zugelassen wird.

4. Computerimplementiertes Verfahren nach einem der vorhergehenden Ansprüche, wobei im Testsystem (TE) eine Datenkommunikationsverbindung (DT) vom zweiten Rechnernetz (NW2) oder vom Abbild des zweiten Rechnernetzes (NW2') zum Abbild des ersten Rechnernetzes (NW1') unterbunden wird.

5. Computerimplementiertes Verfahren nach einem der vorhergehenden Ansprüche, wobei im Testsystem (TE) die Datenkommunikationsverbindung (DC) der computerimplementierten Anwendung (APP) zwischen dem Abbild ersten Rechnernetzes (NW1') und dem zweiten Rechnernetz (NW2) oder dem Abbild des zweiten Rechnernetzes (NW2') simuliert wird.

6. Computerimplementiertes Verfahren nach einem der vorhergehenden Ansprüche, wobei eine Datenkommunikationsverbindung (DC) der computerimplementierten Anwendung (APP), die zwischen dem ersten Rechnernetz (NW1) und dem zweiten Rechnernetz (NW2) über mehr als ein Zugangsschutzsystem (FW1, FW2, FW3,...) erfolgt, durch mehr als einen Sensor ermittelt wird und für jedes dieser Zugangsschutzsysteme (FW1, FW2, FW3,...) jeweils eine Konfigurationsregel (R1, R2, R3, ...) zum Zulassen der Datenkommunikationsverbindung (DC) der computerimplementierten Anwendung (APP) abgeleitet wird.

7. Computerimplementiertes Verfahren nach einem der vorhergehenden Ansprüche, wobei die Art der Datenkommunikationsverbindung (DC) der computerimplementierten Anwendung ermittelt wird.

8. Computerimplementiertes Verfahren nach einem der vorhergehenden Ansprüche, wobei aus der Art der Datenkommunikationsverbindung (DC) der computerimplementierten Anwendung eine Kommunikationscharakteristik ermittelt und daraus eine Konfigurationsregel für das Zugangsschutzsystem (FW) abgeleitet wird.

9. Computerimplementiertes Verfahren nach einem der vorhergehenden Ansprüche, wobei die Konfigurationsregel vom Testsystem (TE) in eine Produktivumgebung (PE), die dem Testsystem (TE) zumindest ähnlich ist, zum Konfigurieren des Zugangsschutzsystems (FW) bereitgestellt wird.

10. Computerimplementiertes Verfahren nach einem der vorhergehenden Ansprüche, wobei das Zugangsschutzsystem (FW) gemäß der Konfigurationsregel konfiguriert wird.

11. Computerimplementiertes Verfahren nach einem der Ansprüche 8 bis 10, wobei eine Konfigurationsanleitung zum Konfigurieren des Zugangsschutzsystems (FW) gemäß der Konfigurationsregel ermittelt und für eine Konfiguration des Zugangsschutzsystems (FW) ausgegeben wird.

12. Computerimplementiertes Verfahren nach einem der Ansprüche 8 bis 11, wobei die Konfigurationsregel und/oder die Konfigurationsanleitung digital signiert wird.

13. Vorrichtung (100) zum Konfigurieren eines Zugangsschutzsystems (FW), das zur Regulierung einer Datenkommunikationsverbindung einer computerimplementierten Anwendung zwischen einem ersten Rechnernetz (NW1) und einem zweiten Rechnernetz (NW2) geeignet ist, umfassend:
- ein erstes Bereitstellungsmodul (101), das derart eingerichtet ist, die computerimplementierte Anwendung (APP) und/oder ein Abbild des ersten Rechnernetzes (NW1') in einem Testsystem (TE) bereitzustellen,
- ein Anwendungsmodul (102), das derart eingerichtet ist, die computerimplementierte Anwendung im ersten Rechnernetz (NW1) oder im Abbild des ersten Rechnernetzes (NW') im Testsystem (TE) auszuführen,
- einen Sensor (103), der derart eingerichtet ist, eine bei der Ausführung der computerimplementierten Anwendung notwendige Datenkommunikationsverbindung (DC) der computerimplementierten Anwendung (APP) zwischen dem ersten Rechnernetz (NW1) oder dem Abbild des ersten Rechnernetzes (NW1') und dem zweiten Rechnernetz (NW2) zu ermitteln,
- ein Ableitungsmodul (104), das derart eingerichtet ist, anhand der vom Sensor ermittelten Datenkommunikationsverbindung (DC) eine Konfigurationsregel für das Zugangsschutzsystem (FW) zum Zulassen der Datenkommunikationsverbindung (DC) der computerimplementierten Anwendung (APP) zwischen dem ersten Rechnernetz (NW1) und dem zweiten Rechnernetz (NW2) abzuleiten und
- ein Ausgabemodul (105), das derart eingerichtet ist, die Konfigurationsregel zum Konfigurieren des Zugangsschutzsystems (FW) auszugegeben.

14. Vorrichtung nach Anspruch 13, umfassend ein Konfigurationsmodul (106), das derart eingerichtet ist, das Zugangsschutzsystem (FW) gemäß der Konfigurationsregel zu konfigurieren.

15. Testsystem (TE), das eine Vorrichtung nach Anspruch 13 umfasst.

16. Zugangsschutzsystem (FW), das zur Regulierung einer Datenkommunikationsverbindung einer computerimplementierten Anwendung (APP) zwischen einem ersten Rechnernetz (NW1) und einem zweiten Rechnernetz (NW2) geeignet ist und das nach dem Verfahren nach einem der Ansprüche 1 bis 13 konfiguriert ist.

17. Computerprogrammprodukt, das direkt in einen programmierbaren Computer ladbar ist, umfassend Programmcodeteile, die dazu geeignet sind, die Schritte eines Verfahrens nach einem der Ansprüche 1 bis 12 durchzuführen.

18. Computerlesbarer Datenträger, auf dem das Computerprogrammprodukt nach Anspruch 17 gespeichert ist.
